# EUROPEAN PATENT APPLICATION

(11) **EP 4 632 614 A1**
(43) Date of publication of application: **15.10.2025**
(21) Application number: 24169984.2
(22) Date of filing: 12.04.2024
(51) Int. Cl.: G06F 21/64, H04L 9/32, H04L 9/00

(54) **BLOCKCHAIN CONSENSUS**

(71) Applicant: Self Technology Pty Ltd, Varsity Lakes, QLD 4227 (AU)
(72) Inventor: Jonathan, MacDonald, Grand Cayman, KY1-1002 (KY)
(74) Representative: Cross, James Peter Archibald

(57) **Abstract**

A consensus method for adding blocks to a blockchain comprises Al-based block builders that form blocks of transactions; a voting algorithm that organises voting for candidate blocks to be added to the blockchain; and validators that participate in voting for candidate blocks and thereby determines the block to be added to the blockchain.

## Description

### Field of the Invention

This invention relates to a consensus method in a blockchain network, and a system and computer program product for implementing the method.

### Background

Blockchain technology is based on a distributed ledger system that allows for secure, transparent, and tamper-proof transactions, recorded as blocks. Each block contains a hash of the previous block, a timestamp, and transaction data. Hence the blocks form a chain, as each block depends on the previous block.

One feature of blockchain technology is that there is no centralised authority that determines the validity of transactions and adds them to the blockchain; instead, a consensus mechanism is required by which nodes in a blockchain network add blocks to the blockchain. The consensus mechanism should be resistant to spoofing, in which a bad actor seeks to add blocks containing fraudulent or inaccurate information.

In conventional blockchain technology, one type of consensus mechanism is Proof of Work (PoW) in which appending entities must expend significant computational effort in order to add blocks to the blockchain. One example of a PoW mechanism is the mining process, using for example in Bitcoin, in which miners compete to mine tokens (e.g. cryptocurrency) and append blocks. This type of consensus mechanism is, by design, demanding of computational power and therefore wasteful of energy.

Another type of conventional consensus mechanism is Proof of Stake (PoS), in which appending entities must hold a minimum number of blockchain tokens in order to add blocks to the blockchain. PoS is less energy intensive than PoW, but can lead to centralisation, in which a few entities holding a large number of tokens come to control the network. PoS is also vulnerable to attack because of the low computational cost of spoofing.

### Summary of the Invention

Aspects of the present invention are set out in the accompanying claims.

At least some embodiments of the invention employ a consensus mechanism for adding blocks to a blockchain, involving: an Al-based block builder algorithm that forms blocks of transactions; a voting algorithm that organises voting for candidate blocks to be added to the blockchain; and an Al-based validator algorithm that participates in voting for candidate blocks and thereby determines the node or appending entity that has the right to add a block to the blockchain.

The candidate blocks may comprise a subset or list of blocks each generated by a respective block builder algorithm or node, referred to as a block builder. An entity that coordinates the voting, such as an entity that organises the voting, may generate a reference block that is compared with blocks generated by block builders and may select the candidate blocks from among the reference block and the blocks generated by block builders; this may prevent spoofing by collaboration between block builders.

The candidate blocks may be selected from blocks generated by block builders that have not generated blocks that were added to the blockchain in previous rounds, at least over a predetermined number of previous rounds. This may avoid control of the consensus mechanism by a small subset of block builders, which could enable spoofing.

The validators eligible to vote for the block to be added to the blockchain may be selected from available validators based on whether the validators have participated in voting for previous rounds. This may encourage participation by the validators.

Each of the validators may be associated with a wallet for containing tokens for use in transactions that may be included in the blockchain. Eligible validators are selected from available validators on the basis of tokens held in the associated wallets. This may encourage participation by the validators in transactions.

Each of the validators may use a machine learning model to vote for one of the candidate blocks. The machine learning model may be trained using the results of voting in previous rounds, together with information associated with the blocks that were voted for. This may improve the voting process without requiring continuous manual voting by owners of the associated wallets. However, such manual voting may be required in at least some rounds in order to provide training for the machine learning model.

The block to be added to the blockchain may be validated by a validator that did not vote for the block to be added to the blockchain; this may prevent spoofing of the consensus mechanism by collaboration between validators.

The validation may be based on the state of a wallet associated with a transaction included within the block, and may be performed by combining the state of the wallet with a hash of said transaction to generate an updated state of the wallet, and comparing the updated state of the wallet with an updated state of the wallet calculated when signing the transaction using said wallet. In this way, the association between validators and wallets may be used to validate the block.

In other aspects, there are provided systems and devices configured to perform the methods as described above. In a further aspect, there is provided a computer program comprising machine readable instructions arranged to cause a programmable device to carry out the any one of the methods as described above.

### Brief Description of the Drawings

There now follows, by way of example only, a detailed description of embodiments of the present invention, with references to the figures identified below.
Figure 1 is a flowchart outlining the steps performed in an embodiment.
Figure 2 is a diagram illustrating selection of block builders for the current round.
Figure 3 is a diagram illustrating building of blocks for the current round.
Figure 4 is a diagram illustrating the selection of validators for the current round.
Figure 5 is a diagram illustrating voting by selected validators in the current round.
Figure 6 is a diagram illustrating validation of the selected block for the current round.
Figure 7 is a diagram illustrating validation of the selected block for the current round based on a state of a wallet associated with a validator.
Figure 8 is a graph showing PointPrice against data length for a set of transactions, together with a target PointPrice.
Figure 9 is a diagram of an example of a computer system on which one or more functions of embodiments may be implemented.

### Description of Embodiments

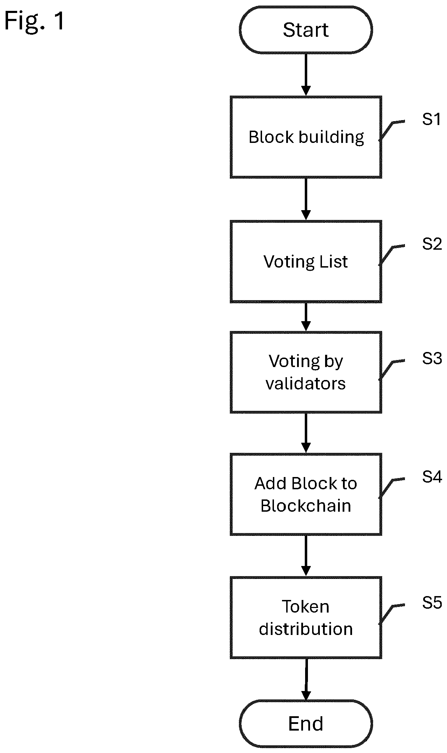

Figure 1 is a flowchart outlining the steps performed in selecting a block for addition to a blockchain using a consensus method in an embodiment of the invention. The flowchart illustrates a current round of block selection and the addition of the selected block to the blockchain, which may be repeated for each new block to be added to the blockchain.

In this embodiment, there is a plurality of participating validators V1...Vn and a plurality of participating block builders BB1... BBn, as described in more detail below. Block builders BB may comprise blockchain nodes that store previously added blocks of the blockchain and participate in forming and packaging new blocks for addition to the blockchain, containing transactions obtained from a mempool M (i.e. a memory pool of unconfirmed transactions which have not yet been added to the blockchain).

Validators V may each comprise lite blockchain nodes that store network wallet addresses associated with respective wallet owners, and which may be selected to perform block validation as described below. Each validator V may be associated with a human user or owner who owns a corresponding wallet W containing tokens (e.g. digital currency) which may transferred between wallets of different owners in transactions and which may be distributed in step S5 as discussed below.

The consensus method may be managed by a Proof of AI (PoAl) entity P which may be implemented at one or more nodes of the blockchain network. Details of the functions of the PoAl entity P are described in more detail below.

As a first step S1, each block builder BB selected for participation in the current round assembles transactions from a mempool M into a respective candidate block B, using a respective machine learning (ML) algorithm. At step S2, a Proof of AI (PoAI) voting algorithm selects one or more of the candidate blocks B for inclusion in a voting list. At step S3, one of the candidate blocks B included in the voting list is chosen by one or more validators V. At step S4, the chosen block B is added to the blockchain. At step S5, tokens are distributed to the block builder BB whose block B was chosen and to the validators V who participated in the validation process at step S3. The process may be repeated each time a block B is to be added to the blockchain. Specific embodiments of each of these steps are described in more detail below.

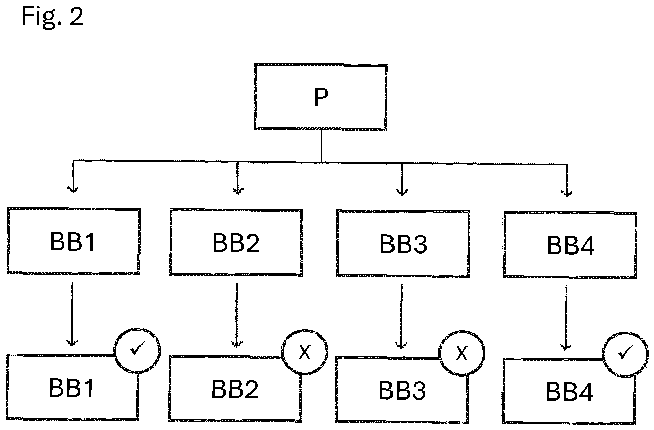

In step S1, the PoAl entity P may first select which block builders BB are eligible to participate in the current round. For example, as illustrated in Fig. 2, block builders BB1 and BB4 may be selected but block builders BB2 and BB3 may be rejected based on one or more predetermined criteria, for example whether the block builder BB has been selected to add a block to the blockchain within the previous N rounds, where N is a predetermined number.

Each selected block builder BB executes a respective process for efficiently forming a block from transactions available in the mempool M. The process may be based on a machine learning (ML) model with initial parameters that are refined by machine learning so as to improve efficiency in selecting transactions for adding to a block.

Each block builder BB may select transactions from the mempool M for inclusion in the block builder's respective block B based on one or more priority rules. For example, transactions may be considered in the following order of descending priority based on a price of each transaction, with limits on the fraction of the total number n of transactions in the block:
1. Highest price (<0.2n)
2. Lowest price (<0.2n)
3. Average price (>0.5n)
4. Oldest transactions (<0.1n)

Efficiency in packing transactions into blocks B may be determined by defining a 'PointPrice' as the number of 'points' required to generate each block B, and 'coins' (e.g. tokens) that are generated when the block is added to the blockchain in step S5. The value of points in terms of coins may decrease as the PointPrice increases. For example, up to a first PointPrice threshold such as 30 billion points, each point is equal to 0.001 coins. After the first PointPrice threshold, the value of the additional points is halved, such that each point is valued at 0.0005 coins. After a second PointPrice threshold such as 60 billion points, each additional point is valued at 0.00025 coins.

The efficiency of a block B may be defined such that an efficient block has an average PointPrice that is close to the actual PointPrice. An efficient block B should include transactions with the maximum useful information that can be entered into the block B. By limiting the number of transactions with a higher than average PointPrice that can be added to the block, the number of users who set a high PointPrice for a transaction should be reduced. However, these users are compensated by the limited number of transactions with a low PointPrice. Since a minimum fraction is set for average PointPrice transactions, most of these transactions will be validated.

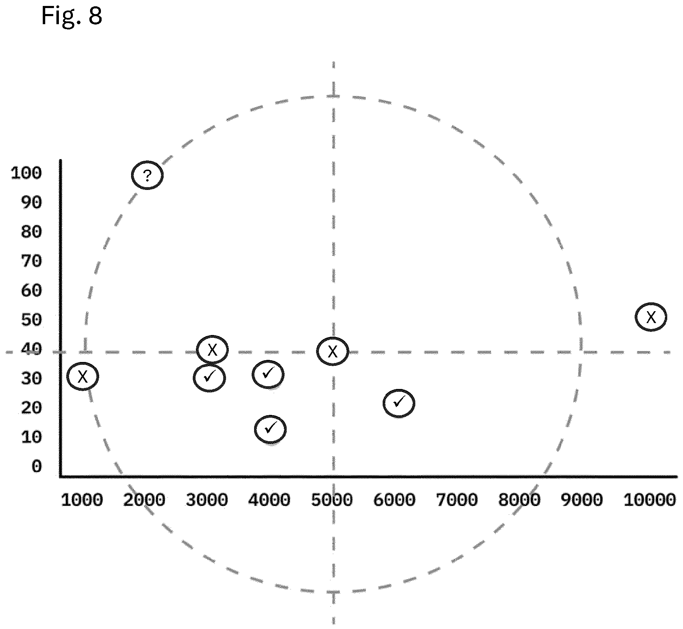

Figure 8 is a graph showing PointPrice on the vertical axis and data length of a transaction on the horizontal axis. An algorithm sets a target PointPrice as shown by the intersection of crosshairs on the graph. The points on the graph show sample transactions, with ticked points showing transactions accepted by a block builder for inclusion in a block, and crossed points show rejected transactions. The point labelled with a question mark shows a transaction that may or may not be accepted.

Each block builder's BB respective ML model is trained based on its work in selecting transactions for a block B, comparing its results with those of other block builders BB, and the final voting result which determines which block builder's block B is added to the block chain. The more frequently a block builder BB forms a block B and the more transactions it processes from the mempool M during the assembly of the block B, the more efficient is the block Band the greater the chance that this block B will be chosen for inclusion in the blockchain.

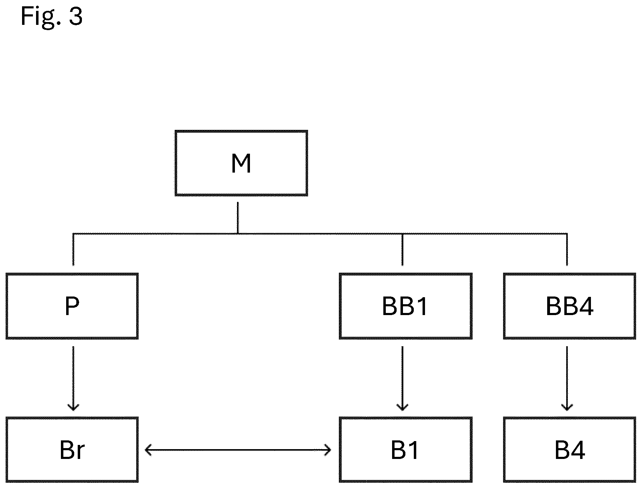

In the current round, a timer is started setting a period for assembly of a new block. During this period, as shown in Figure 3 each selected block builder BB1, BB4 selects transactions from the mempool M to form a respective block B1, B4. When the period finishes, each selected block builder BB submits its assembled block B for addition to a voting list with the following information:
- Block assembly information e.g. a timestamp of the current block assembly and/or other information relating to assembly of the block
- Block efficiency (e.g. % filling of block with useful information)
- Total income of block builder during its existence
- Timestamp of last block assembly
- Percentage of votes out of total number of attempts
- Percentage of successful votes out of total number of voting entities (e.g. validators)

A PoAl entity P organises the voting process but does not directly influence the results or participate in voting. As shown in Figure 3, the PoAl entity uses a similar or identical ML model to that of the block builders BB to build its own reference block Br from transactions in the mempool M. The PoAl entity P then compares its reference block Br to the blocks B1, B4 generated by the corresponding block builders BB1, BB4; if a block B1, B4 generated by a block builder BB1, BB4 is more efficient than the reference block Br, as measured for example by an efficiency coefficient, the more efficient block BB1, BB4 becomes the new reference block Br. The PoAl entity then compiles a voting list comprises the most efficient blocks B. The use of a reference block Br reduces the risk of interference with the block selection process, for example by collaboration between the selected block builders BB1, BB4.

The PoAl entity P may apply additional criteria when selecting blocks BB1, BB4 for inclusion in the voting list, such as block quality. The PoAl entity P may remove from the voting list those block builders BB who have successfully submitted blocks to the chain in the last N rounds, where N is a predetermined integer. This policy prevents a small number of block builders BB from monopolising the addition of blocks to the block chain and thereby reduces the risk of spoofing. The policy also distributes rewards more evenly among the block builders BB.

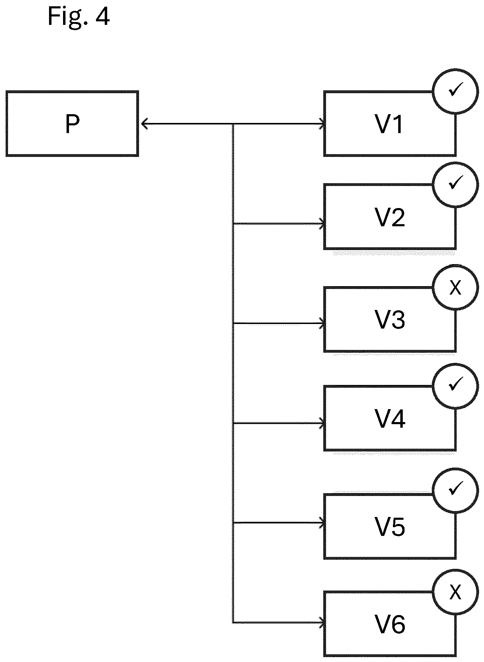

As shown in Figure 4, the PoAl entity P selects which validators V are eligible to vote in the current round, based for example on behaviour (or other properties) of the validators V e.g. whether the validator V has voted in previous rounds and/or the number of tokens held by the validator V. For a validator V to be eligible to vote, the associated wallet W must be active; for example there must have been at least one transaction using the wallet W within a predetermined period (e.g. N hours). Additionally or alternatively, the wallet W must contain at least a threshold amount of tokens e.g. digital currency.

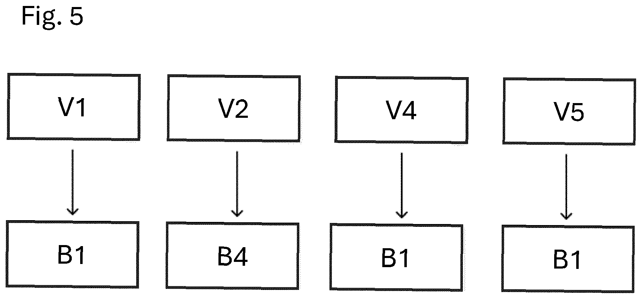

Each of the eligible validators V1, V2, V4, V5 then vote (step S3) for one of the block B in the voting list to determine which block B in the voting list is to be added to the blockchain. Each validator V may use an AI model with training based on the results of voting in previous rounds and analysis of the information submitted by the block builder BB with each block B, as described above. In the example shown in Figure 5, validators V1, V4 and V5 each vote for block B1, while validator V2 votes for block B4.

The validator V may request the corresponding owner to manually vote for one of the block builders BB on the voting list. Preferably, the validator V reduces the voting list to a subset (e.g. two) of the blocks B on the voting list, from which the owner must select one. This manual vote may be used to train the AI model of the validator V so as to reduce the reliance in manual voting in subsequent rounds. However, manual voting may be required in some subsequent rounds to verify that the owner is a real network user and is active. If the owner does not participate in one or more manual votes, the associated validator V may be excluded from the list of eligible validators V in subsequent rounds, so as to encourage ongoing participation in securing the network. The order and timing of manual voting may be determined randomly or pseudo-randomly for each validator V to prevent collective voting. The owner cannot request a manual vote in any specific round, or influence in which round a manual vote is required.

The PoAl entity P then selects a winning block B based on the votes from eligible validators V. For example, the block B from the voting list with the highest number of votes (e.g. block B1 in the example of Figure 5) may be selected as the winning block. The winning block B may then undergo a validation process by a randomly or pseudo-randomly selected one of the active validators V that did not vote for the winning block (e.g. validator V2 in the example of Figure 5).

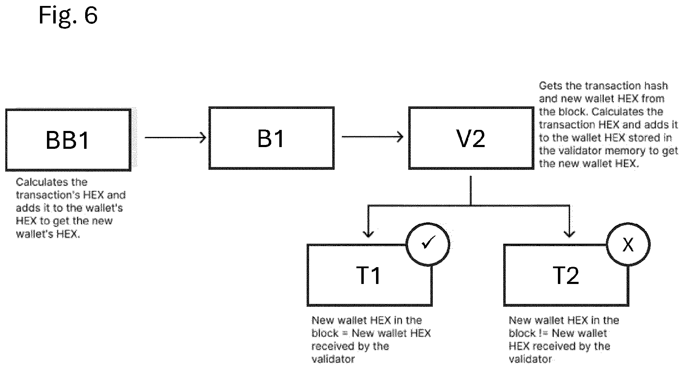

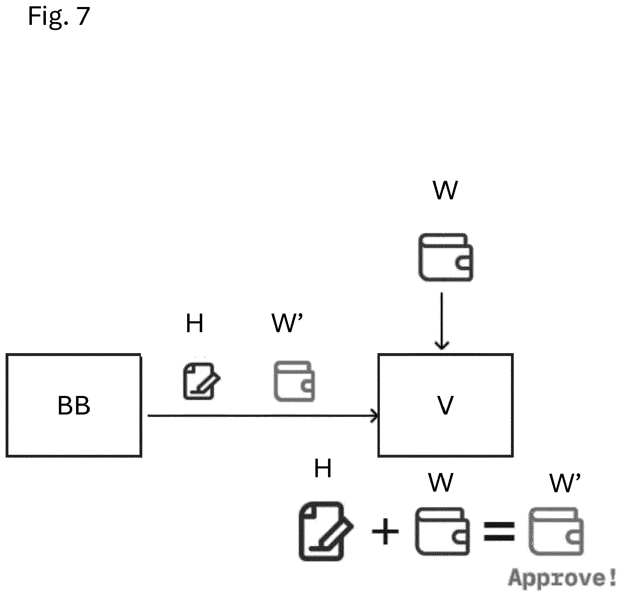

An example of the validation process will now be described with reference to Figures 6 and 7. Each wallet W corresponding to a validator V has an assigned state, herein referred to as a 'colour', corresponding to a single hexadecimal character, which state changes based on transactions made using the wallet W, for example as follows. When an owner of the wallet W signs a transaction in the wallet W, a hexadecimal hash H is generated. When building the block, the block builder BB generates a single hexadecimal character from the hash H, for example by adding together hexadecimal characters from the hash H and taking the last character of the sum. The block builder BB then adds the single hexadecimal character from the transaction to the current hexadecimal character of the wallet W, to obtain a new single hexadecimal character for the wallet corresponding to a new wallet state W'. This new hexadecimal character for the wallet is included in the block B built by the block builder BB, together with the hash H.

When a validator V is selected to validate a winning block B as described above, the selected validator V performs the same process for generating a new hexadecimal character for the wallet W' as performed by the block builder BB, based on the old hexadecimal character of the wallet W and the transaction hash H. If the new hexadecimal character for the wallet W' as calculated by the validator V matches the new hexadecimal character for the wallet W' as included in the block B, the validator V confirms the block B as valid. The wallet W is then updated with the new hexadecimal character to the new wallet state W'.

At step S5, tokens are distributed to the winning block builder BB (e.g. 90% of the tokens), the validators V1, V4, V5 who voted for the winning block B (e.g. 8% of the tokens divided among those validators), the validator V2 that validated the winning block (e.g. 1%), and the PoAl entity P (1%). The distribution of tokens provides a reward for participation in the consensus mechanism and may be adjusted depending on the cost to the participating entities. The distribution of tokens is not purely a financial incentive, but may be used to determine which validators V and/or block builders BB are eligible to participate in subsequent rounds, as described above.

### Example Computer System Implementation

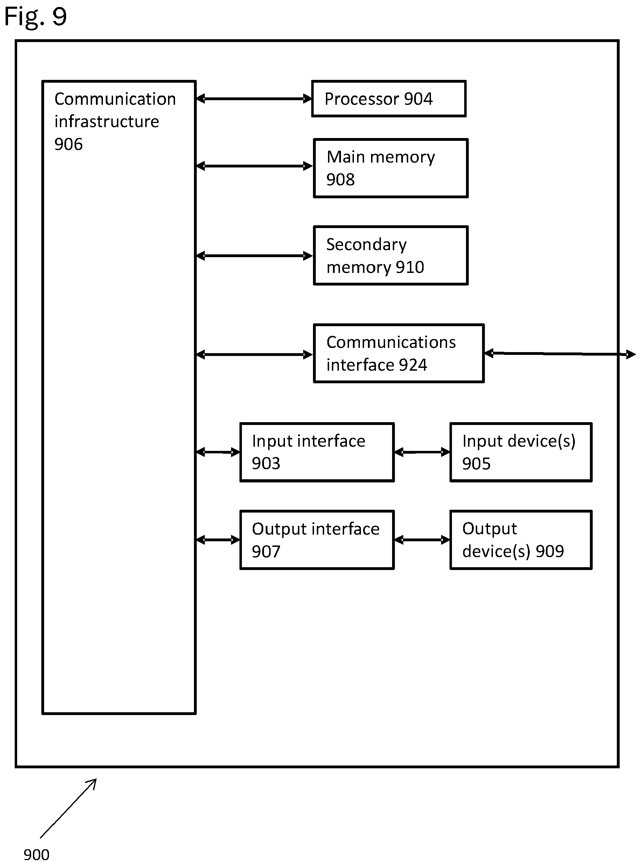

Figure 9 illustrates an example computer system 900 in which embodiments of the present invention, or portions thereof, can be implemented as computer-readable code to program processing components of the computer system 900. For example, the block builders BB and/or validators V may be implemented on such a computer system.

Various embodiments of the invention are described in terms of this example computer system 900. After reading this description, it will become apparent to a person skilled in the relevant art how to implement the invention using other computer systems and/or computer architectures.

Computer system 900 includes one or more processors, such as processor 904. Processor 904 can be a special purpose or a general-purpose processor. Processor 904 is connected to a communication infrastructure 906 (for example, a bus, or network). Computer system 900 may also include a user input interface 903 connected to one or more input device(s) 905 and an output interface 907 connected to one or more output devices 909.

Computer system 900 also includes a main memory 908, preferably random access memory (RAM), and may also include a secondary memory 910 such as a hard disk drive, a removable storage drive, flash memory and/or any similar non-volatile storage mechanism. As will be appreciated by persons skilled in the relevant art(s), secondary memory may include a non-transitory computer usable storage medium having stored therein computer software and/or data.

In alternative implementations, secondary memory 910 may include other similar means for allowing computer programs or other instructions to be loaded into computer system 900. Such means may include, for example, a removable storage unit and an interface.

Computer system 900 may also include a communications interface 924. Communications interface 924 allows software and data to be transferred between computer system 900 and external devices, for example over a network such as a LAN, WAN and/or the Internet.

Various aspects of the present invention can be implemented by software and/or firmware (also called computer programs, instructions or computer control logic) to program programmable hardware, or hardware including special-purpose hardwired circuits such as application-specific integrated circuits (ASICs), programmable logic devices (PLDs), field-programmable gate arrays (FPGAs), etc. of the computer system 900, or a combination thereof. Computer programs for use in implementing the techniques introduced here may be stored on a machine-readable storage medium and may be executed by one or more general-purpose or special-purpose programmable microprocessors. The terms "computer program medium", "non-transitory computer readable medium" and "computer usable medium" introduced herein can generally refer to media such as a removable storage unit or a hard disk. Computer program medium, computer readable storage medium, and computer usable medium can also refer to memories, such as main memory 908 and secondary memory 910, which can be memory semiconductors (e.g. DRAMs, etc.). These computer program products are means for providing software to computer system 900.

Computer programs are stored in main memory 908 and/or secondary memory 910. Computer programs may also be received via communications interface 924. Such computer programs, when executed, enable computer system 900 to implement the present invention as described herein. In particular, the computer programs, when executed, enable processor 904 to implement the processes of embodiments of the present invention, as described above. Accordingly, such computer programs represent controllers of the computer system 900. Where the invention is implemented using software, the software may be stored in a computer program product and loaded into computer system 900 using a removable storage drive, hard drive, or communications interface 924.

Embodiments of the invention employ any computer useable or readable medium, known now or in the future. Examples of computer useable mediums include, but are not limited to, primary storage devices (e.g., any type of random access memory), secondary storage devices (e.g., hard drives, tapes, magnetic storage devices, optical storage devices, MEMS, nano-technological storage device, etc.), and communication mediums (e.g., wired and wireless communications networks, local area networks, wide area networks, intranets, etc.).

### Alternatives and Modifications

It will be understood that embodiments of the present invention are described herein by way of example only, and that various changes and modifications may be made without departing from the scope of the invention.

For example, it will be appreciated that although the respective processes and associated processing modules are described as separate embodiments, aspects of the described embodiments can be combined to form further embodiments.

Reference in this specification to "an embodiment" are not necessarily all referring to the same embodiment, nor are separate or alternative embodiments mutually exclusive of other embodiments. In particular, it will be appreciated that aspects of the above described embodiments can be combined to form further embodiments. Similarly, various features are described which may be exhibited by some embodiments and not by others. Yet further alternative embodiments may be envisaged, which nevertheless fall within the scope of the following claims.

## Claims

1. A computer-implemented consensus method for selecting a block to be added to a blockchain, comprising:
accessing, from each of a plurality of block builders, a corresponding block comprising transactions to be added to the blockchain;
selecting a subset of the blocks;
receiving, from each of a plurality of validators, a corresponding vote indicating a selection of one or more of the subset of blocks; and
selecting which of the subset of blocks is to be added to the blockchain based on the votes from the corresponding validators.

2. The method of claim 1, including generating a reference block comprising transactions to be added to the blockchain, wherein the subset of blocks is selected from among the reference block and the blocks from the block builders.

3. The method of any preceding claim, wherein the plurality of block builders are selected from available block builders based on which of the block builders have not been successful in producing blocks that have previously been added to the blockchain.

4. The method of any preceding claim, wherein the plurality of validators are selected from available validators based on whether the validators have voted on previous blocks added to the blockchain.

5. The method of any preceding claim, wherein each of the validators has an associated wallet for containing tokens which may be used in said transactions, wherein the plurality of validators are selected from available validators on the basis of tokens held in the associated wallets.

6. The method of any preceding claim, wherein each of the validators uses a machine learning model to vote for the selection from the subset of blocks, based on information from the corresponding block builders and/or voting on previous blocks in the blockchain.

7. The method of claim 6, including selectively requiring a manual vote from one or more of the validators instead of a vote generated by the machine learning model.

8. The method of any preceding claim, wherein each of the blocks is assembled using a corresponding machine learning model of the corresponding block builder.

9. The method of any preceding claim, including validating the block selected for addition to the blockchain, the validation being performed by one of the plurality of validators which did not vote for the block selected for addition to the blockchain.

10. The method of claim 9, wherein the validation is based on a state of a wallet associated with a transaction included within the block.

11. The method of claim 10, wherein the validation is performed by combining the state of the wallet with a hash of said transaction to generate an updated state of the wallet, and comparing the updated state of the wallet with an updated state of the wallet calculated when signing the transaction using said wallet.

12. The method of any preceding claim, including distributing one or more tokens to at least one of: the block builder that produced the block added to the blockchain and the validator or validators that voted for the block added to the blockchain.

13. The method of claim 12 when dependent directly or indirectly on claim 9, including distributing one or more tokens to the validator that performed the validation of the block to be added to the blockchain.

14. A computer system comprising:
at least one processor; and
at least one memory storing a computer program which, when executed by the at least one processor, cause the computer system to perform the steps of any one of claims.

15. A computer program product comprising instructions stored thereon for causing a computer to perform a method in accordance with any one of claims 1-13.
